# EUROPEAN PATENT SPECIFICATION

(11) **EP 3 761 247 B1**
(45) Date of publication and mention of the grant of the patent: **03.09.2025**
(21) Application number: 19184193.1
(22) Date of filing: 03.07.2019
(51) Int. Cl.: G06Q 20/12, G06Q 20/32, G06Q 20/38, G06Q 20/40

(54) **SECURE PAYMENT TRANSACTIONS**
SICHERE BEZAHLTRANSAKTIONEN
TRANSACTIONS DE PAIEMENT SÉCURISÉES

(43) Date of publication of application: 06.01.2021
(73) Proprietor: Phos Services Ltd, Bromley, Kent BR1 3WA (GB)
(72) Inventor: Gueorguiev, Ivo Alexandrov, Sevenoaks, TN13 2LQ (GB); Nedelchev, Diyan Stefanov, 8005 Burgas (BG); Martinova, Antonina Ivanova, 1618 Sofia (BG)
(74) Representative: Benatov, Samuil Gabriel

(56) References cited:
- US-A1- 2015 019 443

## Description

### Technical Field

The following description relates to a client, a server and a method for implementing secure payment transactions using a personal mobile communication device in the absence of additional external hardware, such as Point-of-Sale (POS) terminals.

### Background

The development of plastic payment cards necessitated the presence of specialized hardware to accept payments. The electronic POS devices are used in retail for performing such electronic payments. These devices are typically hardware devices provided by the payment processing entities. Some of the POS devices require a wired connection to banks and are used for processing payments only. Even the advanced POS devices, which may have additional functionalities, still require additional hardware.

The recent tendencies aim at allowing merchants to accept payments from contactless cards through mobile smart phones or other personal mobile communication devices without the need for additional or modification of the existing hardware. Payments can be accepted on any mobile smart phone or another personal mobile communication device (tablet, computer, etc) if it has the necessary characteristics. For example, different communication interfaces, such as NFC^{®}, FeliCa^{®} could be utilized for the communication with the contactless cards. There is no need for additional or modification of the existing hardware in the personal mobile communication devices. However, the use of a personal mobile communication device presumes much higher security measures compared to the stand-alone POS devices.

Related work in the area is provided as follows.
Ian LO (WO 2016/033677 A1) describes "Systems and methods for implementing a Point-of-Sale device using a smartphone or tablets without hardware add-ons. The smartphone-based system accepts card payments through the mobile device by either tapping a Near Field Communication (NFC) enabled payment card to the device or by using the device's other features such as its camera to read a card's number or a keyboard to manually input a card's information. US 2015/019443 A1 relates to methods and systems for securely processing remote payment transactions using mobile devices. It describes techniques that use secure elements, encrypted communications, dynamic authentication data, and remote key management to protect sensitive payment credentials during transmission.

There is a need to provide a secure environment for such payments performed through personal mobile communication devices. The problem is solved by the subject matter of the independent claims. Preferred embodiments are defined in the dependent claims.

### Summary

According to one aspect, a client comprising an application for secure payment transactions, the application run on a personal mobile communication device is provided. The client is defined in claim 1.

A client is a piece of computer hardware or software that may access a service made available by another piece of computer hardware of software called server. A client may be or comprise a software application or application in short, which is a set of operations for a computer to perform and designed to fulfil a specific function directly for the user or another application.

The client performs secure payment transactions by means of its own instructions and the functionalities of the personal mobile communication device (PMCD), on which it is run. A PMCD may be any kind of mobile communication device, such as a smart phone a tablet, etc. The term "personal" is intended to distinguish a PMCD from an ordinary POS terminal. The communication interfaces of the PMCD are utilized to substitute the known in the art POS terminals. A secure storage of the PMCD may be used to store any sensitive data.

Upon initial sign-up in the application for secure payment transactions, the client generates a public and a private key pair. These keys are a part of asymmetric encryption that encodes information. A message sender encrypts the message with the public key and the receiver decrypts it with the private key. Public and private key pair helps to encrypt information that ensures data is protected during transmission. The generated private key is stored in a secure storage on the PMCD. The secure storage may be a hardware secure storage according to one embodiment or a software secure storage, according to another embodiment.

An attestation request that follows the initial sign-up allows a trusted device (e.g. here the PMCD) to present reliable evidence to remote parties (e.g. here the terminal management server) about the application. In one embodiment, the attestation request includes the public key generated previously, wherein the public key is signed with an application certificate thus providing evidence about the origin of the application on the PMCD. Ensuring that the provided public key is signed with the trusted certificate, this public key is used to encrypt a device key, which is sent back encrypted from the terminal management server (TMS) to the client. The received device key is stored encrypted in a secure storage on the PMCD.

In one embodiment, the attestation request may also include a mobile communication device ID and login credentials. Login credentials are used for identification. They usually consist of a user ID and password. A mobile communication device ID is a unique ID for a particular PMCD and together with the application certificate provide reliable evidence that the login credentials are coming from a trusted PMCD and client respectively.

When there is an intent on user's end to perform a payment through the client, then log-in is performed and an authorization session token from the terminal management server is received.

Then a request for payment transaction is received at the application for secure transactions. In order to initiate the payment, a contactless card is read by the application for secure payment transactions using a communication interface of the PMCD. In one embodiment, the communication interface is Near Field Communication, adopted to get the card data upon tapping the contactless card on the PMCD when requested to.

Further, the client sends payment information to a payment gateway of the terminal management server for processing, wherein the payment information comprises payment data, contactless card data, the authorization session token and last transaction token, and wherein the payment information is encrypted with the device key, and wherein the device key is decrypted using the private key prior to being used for encrypting the payment information. A payment gateway is a merchant service provided by an e-commerce application service provider that authorizes card payments. The payment data includes amount of the transaction and information for the involved parties in the transaction. The contactless card data includes data for identification of the card being used for paying the transaction.

The last transaction token is a token generated during a previous successful transaction from the application for secure payment transactions run on PMCD.

The number of tokens and encryptions ensure a secure environment for the initiated payment regarding all the involved sensitive data in the payment information.

In one embodiment, the client is further configured to receive one or more PIN certificates from the terminal management server upon attestation and store the one or more PIN certificates in the secure storage. The PIN certificates are used for additional security measure in case a transaction amount is beyond a predefined limit. In such case the payment information further includes a PIN block data and the PIN block data comprises a PIN associated with the contactless card, the PIN encrypted with a certificate from the one or more PIN certificates respective to an issuer of the contactless card.

After the payment information is sent to the payment gateway, the payment information is deleted from the application for secure payment transaction, which is run on the PMCD.

If the transaction is approved, then a response is received at the client with a notification from the payment gateway for execution of the payment transaction. Then a renewed last transaction token generated by the payment gateway is received and substitutes the previous last transaction token.

If the payment transaction is rejected, then a response from the payment gateway with a notification for the rejection is received at the client.

According to another aspect of the invention, a terminal management server for secure payment transactions is provided as defined in claim 6.

The terminal management server (TMS) provides secure payment transactions for a client. The client may comprise an application for secure payment transactions run on a PMCD. In order to provide initially access to the client, the TMS registers a mobile communication device ID respective to a PMCD, and also login credentials to be associated with the mobile communication device ID. The TMS also receives an attestation request from the client, which includes a public key for encryption, generated by the client. The public key is signed by an application certificate. TMS processes the request by performing attestation of the mobile communication device ID and the application certificate and upon attestation, TMS generates a device key for the client, which is sent to the client encrypted with the public key.

When client performs log-in, TMS sends an authorisation session token to the client to be used for the session. Then TMS receives payment information from the client for processing, the information being received at a payment gateway of the TMS. The payment information includes payment data, contactless card data, the authorization session token and a last transaction token and the payment information is encrypted with the device key. TMS decrypts the received payment information and checks the authorization session token and the last transaction token by comparing if they are the valid ones and upon match of the tokens, TMS sends the payment information for processing to a card processor.

The card processor either approves the payment transactions or rejects it. An approval triggers the payment gateway to send a response to the client for execution of the payment transaction, following generation of a renewed last transaction token, sending the renewed last transaction token to the client and substituting the last transaction token with the renewed one for subsequent transactions.

A rejection of the payment transaction by the card processor triggers the payment gateway to send a response with a notification for a rejection to the client.

In one embodiment the attestation request includes also the mobile communication ID and the login credentials.

In one embodiment, the TMS is configured to send one or more PIN certificates to the client upon attestation.

In one embodiment, the payment information further includes a PIN block data, when a transaction amount is beyond a predefined limit, and wherein the PIN block data comprises a PIN associated with a contactless card used by the client for the payment transaction, the PIN encrypted with a certificate from the one or more PIN certificates respective to an issuer of the contactless card.

According to another aspect of the invention, a computer implemented method for secure payment transactions is provided as defined in claim 10.

In one embodiment, the attestation request may also include a mobile communication device ID and login credentials.

In one embodiment, one or more PIN certificates are received by the client from the terminal management server upon attestation and the one or more PIN certificates are stored in the secure storage. The PIN certificates are used for additional security measure in case a transaction amount is beyond a predefined limit. In such case the payment information further includes a PIN block data and the PIN block data comprises a PIN associated with the contactless card, the PIN encrypted with a certificate from the one or more PIN certificates respective to an issuer of the contactless card.

In one embodiment, the communication interface is Near Field Communication.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows an example of a system diagram for secure payment transactions.
Figures 2A and 2B show a flow diagram of a method for secure payment transactions.
Figure 3 shows an example sequence diagram regarding the communication between the entities in Figure 1.
Figure 4 shows a block diagram of an exemplary computer system for performing secure payment transactions.

### Detailed Description

A detailed description of examples will be provided with reference to the drawings. It should be understood, however, that various modifications to the examples may be made. Unless explicitly indicated otherwise, elements of one example may be combined and used in other examples to form new examples.

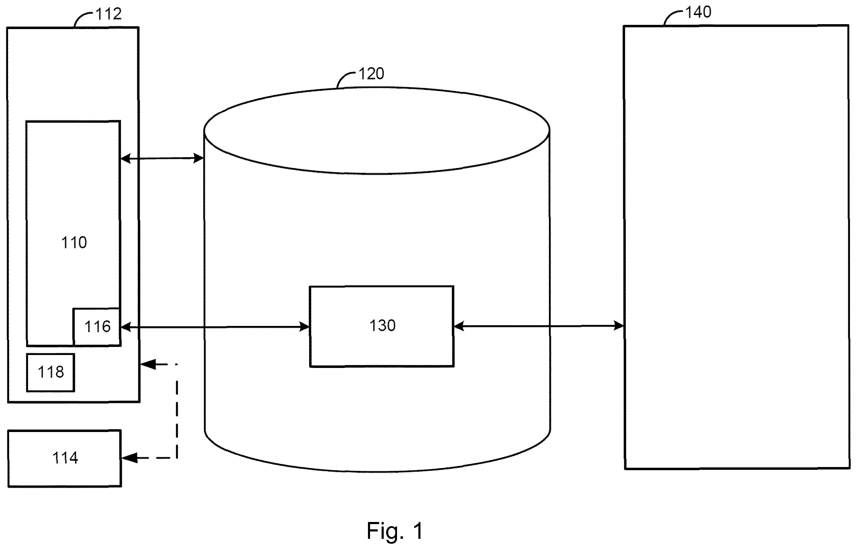

Figure 1 depicts a system for secure payment transactions. The system includes a client 110, a terminal management server (TMS) 120, and a card processor 140. The client 110 may include an application for secure payment transactions (ASPT) 116, which runs on a personal mobile communication device (PMCD) 112.

A client, such as client 110, is a piece of computer hardware or software that may access a service made available by another piece of computer hardware of software called server (e.g. TMS 120). A client may be or comprise a software application or application in short, which is a set of operations for a computer to perform and designed to fulfil a specific function directly for the user or another application.

The client 110 performs secure payment transactions by means of its own instructions and the functionalities of the PMCD 112, on which it is run. A PMCD may be any kind of mobile communication device, such as a smart phone a tablet, etc. The term "personal" is intended to distinguish a PMCD from an ordinary POS terminal. The communication interfaces of the PMCD may be utilized to substitute the known in the art POS terminals. A secure storage (SS) 118 of the PMCD 112 may be used to store any sensitive data.

The terminal management server (TMS) 120 provides secure payment transactions for the client 112. In order to provide initially access to the client 112, the TMS registers a mobile communication device ID respective to a PMCD 112, and also login credentials to be associated with the mobile communication device ID.

Upon initial sign-up in the ASPT 116, the client 110 generates a public and a private key pair. These keys are a part of asymmetric encryption that encodes information. A message sender encrypts the message with the public key and the receiver decrypts it with the private key. Public and private key pair helps to encrypt information that ensures data is protected during transmission.

The generated private key is stored in a SS 118 on the PMCD 112. The secure storage 118 may be a hardware secure storage according to one embodiment or a software secure storage, according to another embodiment.

An attestation request that follows the initial sign-up allows a trusted device (e.g. here the PMCD 112) to present reliable evidence to remote parties (e.g. here the TMS 120) about the ASPT 116. In one embodiment, the attestation request includes the public key generated previously, wherein the public key is signed with an application certificate thus providing evidence about the origin of the APST 116 on the PMCD 112. Ensuring that the provided public key is signed with the trusted certificate, this public key is used to encrypt a device key, which is sent back encrypted from the TMS 120 to the client 110. The received device key is stored encrypted in a secure storage 118 on the PMCD 112.

In one embodiment, the attestation request may also include a mobile communication device ID and login credentials. Login credentials are used for identification. They usually consist of a user ID and password. A mobile communication device ID is a unique ID for a particular PMCD and together with the application certificate provide reliable evidence that the login credentials are coming from a trusted PMCD and client respectively.

When there is an intent on user's end to perform a payment through the client 110, then log-in is performed and an authorization session token from the terminal management server 120 is received.

Then, a request for payment transaction is received at the APST 116. In order to initiate the payment, a contactless card 114 is read by the application for secure payment transactions 116 using a communication interface of the PMCD 112. In one embodiment, the communication interface is Near Field Communication, adopted to get the card data upon tapping the contactless card 114 on the PMCD 112 when requested to.

Further, the client 110 sends payment information to a payment gateway 130 of the terminal management server 120 for processing, wherein the payment information comprises payment data, contactless card data, the authorization session token and last transaction token, and wherein the payment information is encrypted with the device key, and wherein the device key is decrypted using the private key prior to being used for encrypting the payment information. A payment gateway, such as payment gateway 130, is a merchant service provided by an e-commerce application service provider that authorizes card payments. The payment data includes amount of the transaction and information for the involved parties in the transaction. The contactless card data includes data for identification of the card being used for paying the transaction.

The last transaction token is a token generated during a previous successful transaction from the application for secure payment transactions 116 run on PMCD 112.

The number of tokens and encryptions ensure a secure environment for the initiated payment regarding all the involved sensitive data in the payment information.

In one embodiment, the client 110 is further configured to receive one or more PIN certificates from the terminal management server 120 upon attestation and store the one or more PIN certificates in the secure storage 118. The PIN certificates are used for additional security measure in case a transaction amount is beyond a predefined limit. In such case the payment information further includes a PIN block data and the PIN block data comprises a PIN associated with the contactless card 114, the PIN encrypted with a certificate from the one or more PIN certificates respective to an issuer of the contactless card 114.

After the payment information is sent to the payment gateway 130, the payment information is deleted from the application for secure payment transaction 116, which is run on the PMCD 112.

TMS 120 decrypts the received payment information through its payment gateway 130 and checks the authorization session token and the last transaction token by comparing if they are the valid ones and upon match of the tokens, TMS 120 (through its payment gateway 130) sends the payment information for processing to a card processor 140.

The card processor 140 either approves the payment transaction or rejects it. An approval triggers the payment gateway 130 to send a response to the client 110 for execution of the payment transaction, following generation of a renewed last transaction token, sending the renewed last transaction token to the client 110 and substituting the last transaction token with the renewed one for subsequent transactions.

A rejection of the payment transaction by the card processor 140 triggers the payment gateway 130 to send a response with a notification for a rejection to the client 110.

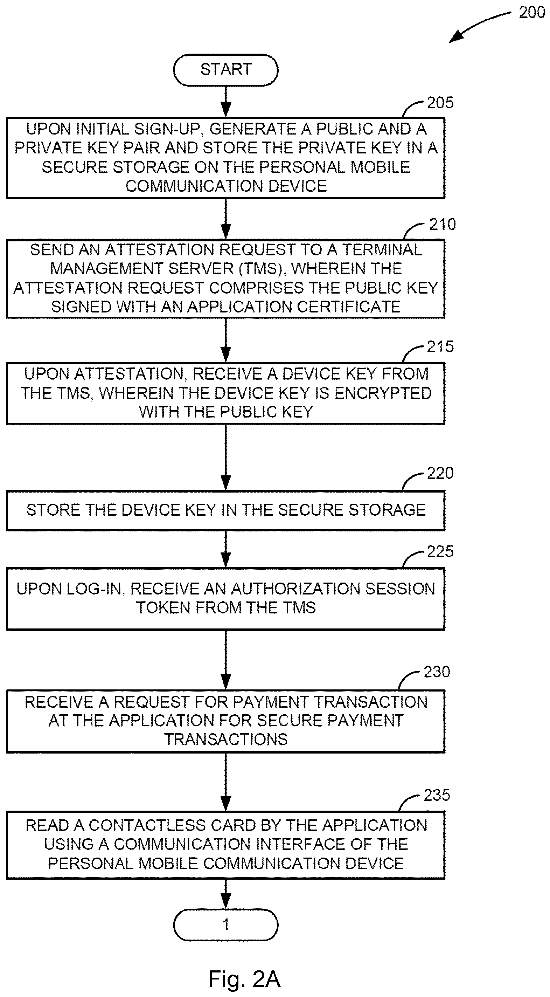

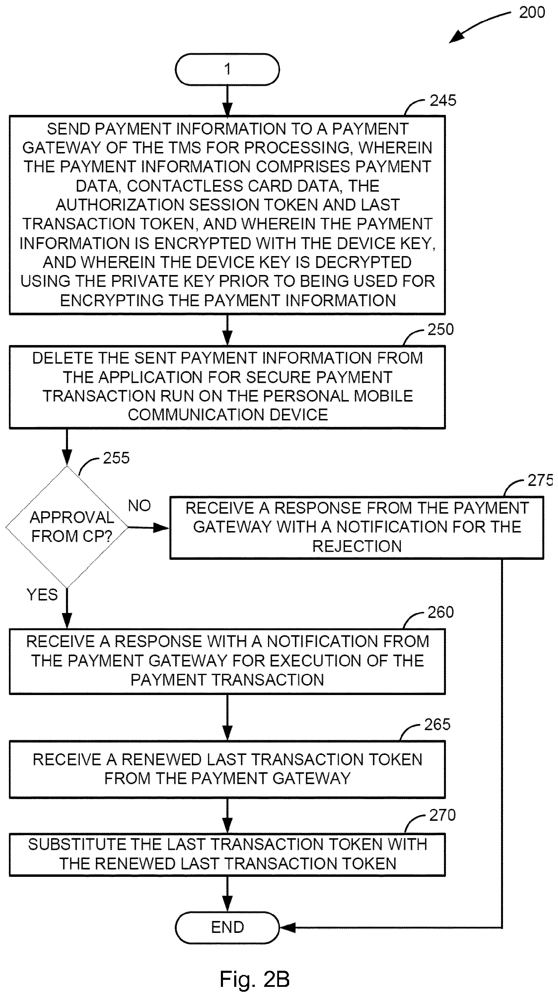

Figures 2A and 2B show a flow diagram 200 of a method for secure payment transactions. The method comprises running by a client 110, an application for secure payment transactions 116 on a personal mobile communication device 112.
At 205, upon initial sign-up, a public and a private key pair are generated, and the private key is stored in a secure storage 118 on the PMCD 112.
At 210, an attestation request is sent to a TMS 120. The attestation request comprises the public key signed with an application certificate.
At 215, upon attestation, a device key is received from the TMS 120. The device key is encrypted with the public key.
At 220, the device key is stored in the secure storage 118.
At 225, upon log-in, an authorization session token is received from the TMS 120.
At 230, a request for payment transaction is received at the application for secure payment transactions 116.
At 235, a contactless card 114 is read by the ASPT 116 using a communication interface of the PMCD 112.
At 245, payment information is sent to a payment gateway 130 of the TMS 120 for processing. The payment information includes payment data, contactless card data, the authorization session token and last transaction token. The payment information is encrypted with the device key, which is decrypted using the private key prior to being used for encrypting the payment information.
At 250, the sent payment information is deleted from the ASPT 116 run on the PMCD 112.
At 255, a check is performed, whether a card processor (CP) 140, approves the payment transaction. If card processor 140 approves the payment transaction at 255, then at 260, a response is received with a notification from the payment gateway 130 for execution of the payment transaction. The approved transaction also triggers receiving, at 260, a renewed last transaction token from the payment gateway 130 and, at 270, the last transaction token is substituted with the renewed last transaction token.
If card processor 140 rejects the payment transaction at 255, then, at 275, a response from the payment gateway 130 is received with a notification for the rejection.

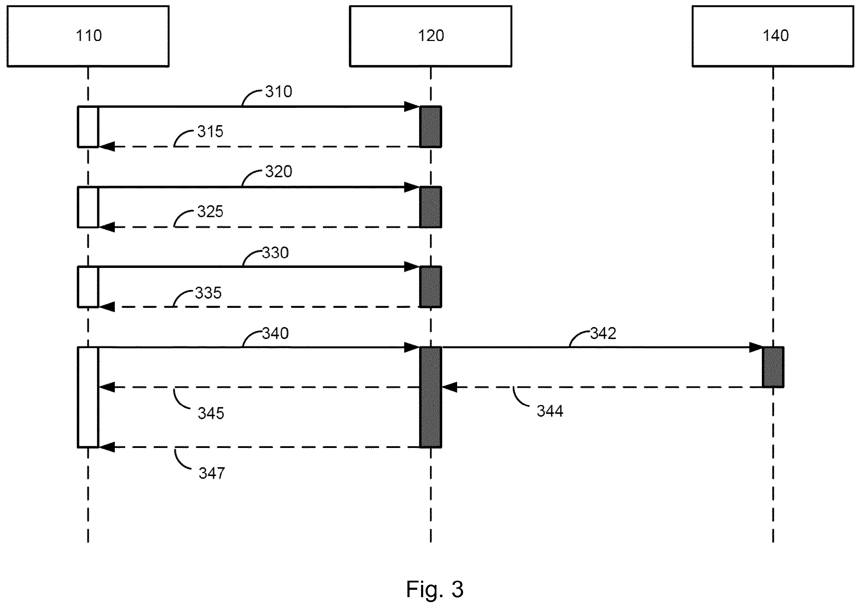

Figure 3 depicts an example sequence diagram regarding the communication between the entities in Figure 1 performing secure payment transactions. The entities comprise the client 110, the terminal management server (TMS) 120 and the card processor 130. The payment gateway 140 within the TMS 130 is not depicted for simplicity, being part of the TMS 130 and thus the activities of the payment gateway 130 regarding transmitted massages related to the payment transaction will be referred to as performed by the TMS 120.

Upon initial sign-up 310 by the client 110 to the TMS 120, TMS 120 returns login credentials 315 for the client 110. In one embodiment, the login credentials are provided to the client 110 by means of an SMS message to the mobile communication device, on which the client runs,

The attestation request 320 from the client 110 to the TMS 120 comprises a public key part of a public private key pair generated by the client 110, the public key signed with an application certificate. In one embodiment, the attestation request may also include the login credentials and a mobile communication device ID, unique for the mobile communication device on which the client 110 runs. In response to the attestation request 320, TMS sends a device key 325 encrypted with the public key.

Upon each log-in 330 of the client 110 to the TMS 120, TMS returns an authorization session token 335 to be used for the session.

When payment information 340 is sent from the client 110 to the TMS 120, TMS checks the validity of the included tokens and other verifiers of the information and its origin, such as valid encryption/decryption, and forwards the payment information 342 to the card processor 140. The card processor 140 either approves or rejects the payment, which is notified via the response 344 from the card processor 140 to the TMS 120. Then a forwarded response 345 is sent from the TMS to the client, informing the client 110 for the approval/rejection of the payment. Upon approval of the payment, this also triggers updating the last transaction token to be used for a subsequent payment transaction by the client 110. The renewed last transaction token 347 is sent from the TMS to the client 110.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

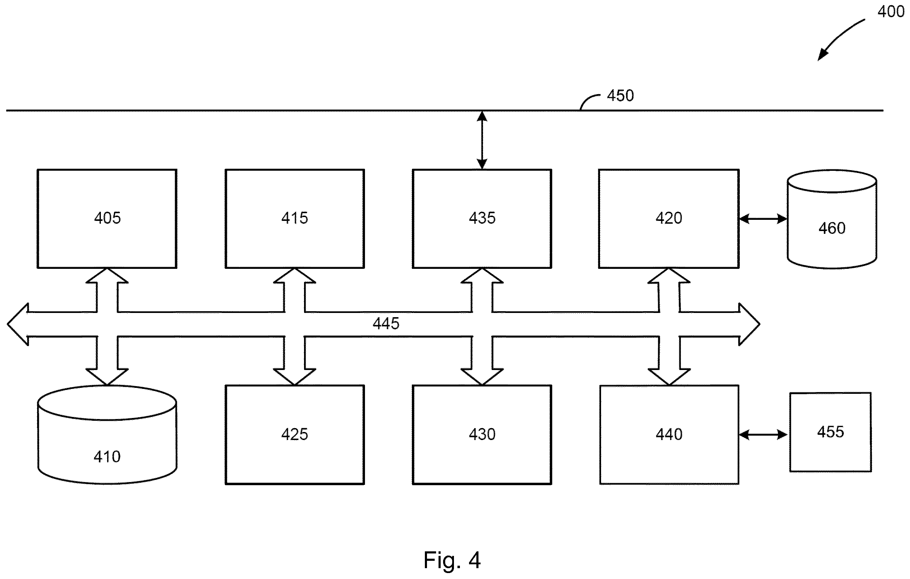

FIG. 4 is a block diagram of an exemplary computer system 400. The computer system 400 includes a processor 405 that executes software instructions or code stored on a computer readable storage medium 455 to perform the above-illustrated methods of the invention. The computer system 400 includes a media reader 440 to read the instructions from the computer readable storage medium 455 and store the instructions in storage 410 or in random access memory (RAM) 415. The storage 410 provides a large space for keeping static data where at least some instructions could be stored for later execution. The stored instructions may be further compiled to generate other representations of the instructions and dynamically stored in the RAM 415. The processor 405 reads instructions from the RAM 415 and performs actions as instructed. According to one embodiment of the invention, the computer system 400 further includes an output device 425 to provide at least some of the results of the execution as output including, but not limited to, visual information to users and an input device 430 to provide a user or another device with means for entering data and/or otherwise interact with the computer system 400. Each of these output devices 425 and input devices 430 could be joined by one or more additional peripherals to further expand the capabilities of the computer system 400. A network communicator 435 may be provided to connect the computer system 400 to a network 450 and in turn to other devices connected to the network 450 including other clients, servers, data stores, and interfaces, for instance. The modules of the computer system 400 are interconnected via a bus 445. Computer system 400 includes a data source interface 420 to access data source 460. The data source 460 can be accessed via one or more abstraction layers implemented in hardware or software. For example, the data source 460 may be accessed by network 450.

The foregoing description, for purposes of explanation, used specific nomenclature to provide a thorough understanding of the invention. However, it will be apparent to one skilled in the art, that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and the equivalents define the scope of the invention.

## Claims

1. A client (110) comprising an application for secure payment transactions (116), the application (116) run on a personal mobile communication device (112), wherein the client (110) is configured to:
upon initial sign-up, generate a public and a private key pair and store the private key in a secure storage (118) on the personal mobile communication device (112);
send an attestation request to a terminal management server (120), wherein the attestation request comprises the public key signed with an application certificate;
upon attestation, receive a device key from the terminal management server, wherein the device key is encrypted with the public key;
store the device key in the secure storage (118);
upon log-in, receive an authorization session token from the terminal management server (120);
receive a request for payment transaction at the application for secure payment transactions (116);
read a contactless card (114) by the application for secure payment transactions (116) using a communication interface of the personal mobile communication device (112);
send payment information to a payment gateway (130) of the terminal management server (120) for processing, wherein the payment information comprises payment data, contactless card data, the authorization session token and a last transaction token, wherein the last transaction token is a token generated during a previous successful transaction from the application for secure payment transactions (116), and wherein the payment information is encrypted with the device key, and wherein the device key is decrypted using the private key prior to being used for encrypting the payment information;
delete the sent payment information from the application for secure payment transactions (116) run on the personal mobile communication device (112);
upon approval of the payment transaction:
receive a response with a notification from the payment gateway (130) for execution of the payment transaction;
receive a renewed last transaction token from the payment gateway (130); and
substitute the last transaction token with the renewed last
transaction token;
or
upon rejection of the payment transaction, receive a response from the payment gateway (130) with a notification for the rejection.

2. The client (110) according to claim 1, wherein the attestation request further comprises a mobile communication device ID and login credentials.

3. The client (110) according to claim 1 or 2, wherein the client is further configured to receive one or more PIN certificates from the terminal management server (120) upon attestation and store the one or more PIN certificates in the secure storage (118).

4. The client (110) according to claim 3, wherein the payment information further comprises a PIN block data, when a transaction amount is beyond a predefined limit, and wherein the PIN block data comprises a PIN associated with the contactless card (114), the PIN encrypted with a certificate from the one or more PIN certificates respective to an issuer of the contactless card (114).

5. The client (110) according to any of the claims 1 to 4, wherein the communication interface is Near Field Communication.

6. A terminal management server (120) for secure payment transactions configured to:
register a mobile communication device ID of a personal mobile communication devices (112) and login credentials to be associated with the mobile communication device ID;
receive an attestation request from a client (110) on the personal mobile communication device (112), wherein the request comprises a public key generated by the client (110), and wherein the public key is signed with an application certificate;
upon attestation of the mobile communication device ID and the application certificate, generate a device key and send the device key encrypted with the public key to the client (110);
upon client log-in, send an authorization session token to the client (110);
receive payment information from the client (110) for processing at a payment gateway (130) of the terminal management server (120), wherein the payment information comprises payment data, contactless card data, the authorization session token and a last transaction token, wherein the last transaction token is a token generated during a previous successful transaction from the application for secure payment transactions (116), and wherein the payment information is encrypted with the device key;
decrypt the received payment information and check the authorization session token and the last transaction token;
when a match of the authorization session token and the last transaction token is confirmed, send the payment information for processing to a card processor (140);
receive a response from the card processor (140), wherein the response comprises:
an approval for the payment transaction, wherein the approval triggers the payment gateway (130) to:
send a response to the client (110) with a notification for execution of the payment transaction;
generate a renewed last transaction token;
send the renewed last transaction token to the client (110); and
substitute the last transaction token with the renewed last transaction token;
or
a rejection for the payment transaction, wherein the rejection triggers the payment gateway (130) to send a response with a notification for the rejection to the client (110).

7. The terminal management server (120), according to claim 6, wherein the attestation request further comprises the mobile communication device ID and the login credentials.

8. The terminal management server (120) according to claim 6 or 7, wherein the terminal management server (120) is further configured to send one or more PIN certificates to the client upon attestation.

9. The terminal management server (120), according to claim 8, wherein the payment information further comprises a PIN block data, when a transaction amount is beyond a predefined limit, and wherein the PIN block data comprises a PIN associated with a contactless card (114) used by the client for the payment transaction, the PIN encrypted with a certificate from the one or more PIN certificates respective to an issuer of the contactless card (114).

10. A computer-implemented method for secure payment transactions, the method comprising:
running by a client (110), an application for secure payment transactions (116) on a personal mobile communication device (112), wherein running the application (116) comprises:
upon initial sign-up, generating a public and a private key pair and storing the private key in a secure storage (118) on the personal mobile communication device (112);
sending an attestation request to a terminal management server (120), wherein the attestation request comprises the public key signed with an application certificate;
upon attestation, receiving a device key from the terminal management server (120), wherein the device key is encrypted with the public key;
storing the device key in the secure storage (118);
upon log-in, receiving an authorization session token from the terminal management server (120);
receiving a request for payment transaction at the application for secure payment transactions (116);
reading a contactless card (114) by the application for secure payment transactions (116) using a communication interface of the personal mobile communication device (112);
sending payment information to a payment gateway (130) of the terminal management server (120) for processing, wherein the payment information comprises payment data, contactless card data, the authorization session token and a last transaction token, wherein the last transaction token is a token generated during a previous successful transaction from the application for secure payment transactions (116), and wherein the payment information is encrypted with the device key, and wherein the device key is decrypted using the private key prior to being used for encrypting the payment information;
deleting the sent payment information from the application for secure payment transactions (116) run on the personal mobile communication device (112);
upon approval of the payment transaction:
receiving a response with a notification from the payment gateway (130) for execution of the payment transaction;
receiving a renewed last transaction token from the payment gateway (130); and
substituting the last transaction token with the renewed last transaction token;
or
upon rejection of the payment transaction, receiving a response from the payment gateway (130) with a notification for the rejection.

11. The method according to claim 10, wherein the attestation request further comprises a mobile communication device ID and login credentials.

12. The method according to claim 10 or 11, wherein running the application for secure payment transactions (116) further comprises receiving one or more PIN certificates from the terminal management server (120) upon attestation and storing the one or more PIN certificates in the secure storage (118).

13. The method according to claim 12, wherein the payment information further comprises a PIN block data, when a transaction amount is beyond a predefined limit, and wherein the PIN block data comprises a PIN associated with the contactless card (114), the PIN encrypted with a certificate from the one or more PIN certificates respective to an issuer of the contactless card.

14. The method according to any of the claims 10 to 13, wherein the communication interface is Near Field Communication.

15. A computer program product comprising computer-readable instructions which, when loaded and executed on a suitable system, perform the steps of a method according to any of the claims 10 to 14.

## Patentansprüche

1. Ein Client (110), umfassend eine Anwendung für sichere Zahlungstransaktionen (116), welche Anwendung auf einem persönlichen mobilen Kommunikationsgerät (112) ausgeführt wird, wobei der Client (110) ist so konfiguriert, dass er:
bei der ersten sign-up Anmeldung ein öffentliches und ein privates Schlüsselpaar generiert und den privaten Schlüssel in einem sicheren Speicher (118) auf dem persönlichen mobilen Kommunikationsgerät (112) speichert;
eine Bestätigungsanfrage an einen Terminalverwaltungsserver (120) sendet, wobei die Bestätigungsanfrage den mit einem Anwendungszertifikat signierten öffentlichen Schlüssel enthält;
nach der Bestätigung einen Geräteschlüssel vom Terminalverwaltungsserver empfängt, der mit dem öffentlichen Schlüssel verschlüsselt ist;
den Geräteschlüssel im sicheren Speicher (118) speichert;
bei der Anmeldung ein Autorisierungssitzungstoken vom Terminalverwaltungsserver (120) empfängt;
eine Zahlungstransaktionsanfrage bei der Anwendung für sichere Zahlungstransaktionen (116) empfängt;
einer kontaktlosen Karte (114) durch die Anwendung für sichere Zahlungstransaktionen (116) über eine Kommunikationsschnittstelle des persönlichen mobilen Kommunikationsgeräts (112) liest;
Zahlungsinformationen an ein Zahlungsgateway (130) des Terminalverwaltungsservers (120) zur Verarbeitung sendet, wobei die Zahlungsinformationen Zahlungsdaten, kontaktlose Kartendaten, das Autorisierungssitzungstoken und ein Token für die letzte Transaktion umfassen, wobei das Token für die letzte Transaktion ist ein Token, das während einer vorherigen erfolgreichen Transaktion der Anwendung für sichere Zahlungstransaktionen (116) generiert wurde und wobei die Zahlungsinformationen mit dem Geräteschlüssel verschlüsselt werden, und wobei der Geräteschlüssel vor seiner Verwendung zur Verschlüsselung der Zahlungsinformationen mit dem privaten Schlüssel entschlüsselt wird;
die gesendeten Zahlungsinformationen aus der Anwendung für sichere Zahlungstransaktionen (116) auf dem persönlichen mobilen Kommunikationsgerät (112) löscht;
nach Genehmigung der Zahlungstransaktion:
eine Antwort mit einer Benachrichtigung vom Zahlungsgateway (130) zur Ausführung der Zahlungstransaktion empfängt;
ein erneuertes Token für die letzte Transaktion vom Zahlungsgateway (130) empfängt; und
den letzten Transaktionstoken durch den erneuerten letzten Transaktionstoken ersetzt;
oder
bei Ablehnung der Zahlungstransaktion eine Antwort vom Zahlungsgateway (130) mit einer Ablehnungsbenachrichtigung erhaltet.

2. Der Client (110) gemäß Anspruch 1, wobei die Bestätigungsanfrage zusätzlich eine Mobilfunkgeräte-ID und Anmeldeinformationen umfasst.

3. Der Client (110) gemäß Anspruch 1 oder 2, wobei der Client außerdem so konfiguriert ist, dass er nach Bestätigung ein oder mehrere PIN-Zertifikate vom Terminalverwaltungsserver (120) empfängt und diese im sicheren Speicher (118) speichert.

4. Der Client (110) gemäß Anspruch 3, wobei die Zahlungsinformationen zusätzlich PIN-Sperrdaten enthalten, wenn ein Transaktionsbetrag einen vordefinierten Grenzwert überschreitet, und wobei die PIN-Sperrdaten eine der kontaktlosen Karte (114) zugeordnete PIN enthalten, die mit einem Zertifikat des einen oder der mehreren PIN-Zertifikate des Ausstellers der kontaktlosen Karte (114) verschlüsselt ist.

5. Der Client (110) gemäß einem der Ansprüche 1 bis 4, wobei die Kommunikationsschnittstelle Near Field Communication ist.

6. Ein Terminalverwaltungsserver (120) für sichere Zahlungstransaktionen, der konfiguriert ist, um:
die ID eines mobilen Kommunikationsgeräts (112) und die damit verknüpften Anmeldeinformationen zu registrieren;
eine Bestätigungsanfrage eines Clients (110) auf dem persönlichen mobilen Kommunikationsgerät (112) zu empfangen, wobei die Anfrage einen vom Client (110) generierten öffentlichen Schlüssel umfasst und der öffentliche Schlüssel mit einem Anwendungszertifikat signiert ist;
nach Bestätigung der ID des mobilen Kommunikationsgeräts und des Anwendungszertifikats einen Geräteschlüssel zu generieren und den mit dem öffentlichen Schlüssel verschlüsselten Geräteschlüssel an den Client (110) zu senden;
nach der log-in Anmeldung des Clients ein Autorisierungssitzungstoken an den Client (110) zu senden;
Zahlungsinformationen vom Client (110) zur Verarbeitung an einem Zahlungsgateway (130) des Terminalverwaltungsservers (120) zu empfangen, wobei die Zahlungsinformationen Zahlungsdaten, Daten der kontaktlosen Karten, das Autorisierungssitzungstoken und ein letztes Transaktionstoken umfassen, wobei das letzte Transaktionstoken ein Token ist, das während einer vorherigen erfolgreichen Transaktion von der Anwendung für sichere Zahlungstransaktionen (116) generiert wurde, und wobei die Zahlungsinformation mit dem Geräteschlüssel verschlüsselt ist;
die empfangene Zahlungsinformation und Überprüfen des Autorisierungssitzungstokens und des letzten Transaktionstokens zu entschlüsseln;
wenn eine Übereinstimmung zwischen dem Autorisierungssitzungstoken und dem letzten Transaktionstoken bestätigt wird, die Zahlungsinformation zur Verarbeitung an einen Kartenprozessor (140) zu senden;
eine Antwort vom Kartenprozessor (140) zu empfangen, wobei die Antwort folgendes umfasst:
eine Genehmigung der Zahlungstransaktion, wobei die Genehmigung das Zahlungsgateway (130) veranlasst, um
eine Antwort mit einer Benachrichtigung zur Ausführung der Zahlungstransaktion an den Client (110) zu senden;
ein erneuertes Token für die letzte Transaktion zu generieren;
das erneuerte Token für die letzte Transaktion an den Client (110) zu senden;
und
das Token für die letzte Transaktion durch das erneuerte Token für die letzte Transaktion zu ersetzen;
oder
eine Ablehnung der Zahlungstransaktion, wobei die Ablehnung das Zahlungsgateway (130) veranlasst, eine Antwort mit einer Benachrichtigung über die Ablehnung an den Client (110) zu senden.

7. Der Terminalverwaltungsserver (120) gemäß Anspruch 6, wobei die Bestätigungsanfrage außerdem die ID des mobilen Kommunikationsgeräts und die Anmeldeinformationen umfasst.

8. Der Terminalverwaltungsserver (120) gemäß Anspruch 6 oder 7, wobei der Terminalverwaltungsserver (120) ferner so konfiguriert ist, dass er nach Bestätigung ein oder mehrere PIN-Zertifikate an den Client sendet.

9. Der Terminalverwaltungsserver (120) gemäß Anspruch 8, wobei die Zahlungsinformationen zusätzlich PIN-Sperrdaten enthalten, wenn ein Transaktionsbetrag einen vordefinierten Grenzwert überschreitet und die PIN-Sperrdaten eine PIN umfassen, die mit einem vom Clients für die Zahlungstransaktion verwendeten kontaktlosen Karte (114) verknüpft ist. Die PIN ist mit einem Zertifikat des oder der PIN-Zertifikate des Ausstellers der kontaktlosen Karte (114) verschlüsselt.

10. Ein computerimplementiertes Verfahren für sichere Zahlungstransaktionen, das Verfahren umfasst:
Ausführen einer Anwendung für sichere Zahlungstransaktionen (116) durch ein Client (110) auf einem persönlichen mobilen Kommunikationsgerät (112), wobei das Ausführen der Anwendung (116) Folgendes umfasst:
bei der ersten sign-up Anmeldung wird ein öffentliches und ein privates Schlüsselpaar generiert und der private Schlüssel in einem sicheren Speicher (118) auf dem persönlichen mobilen Kommunikationsgerät (112) gespeichert;
Senden einer Bestätigungsanfrage an einen Terminalverwaltungsserver (120), wobei die Bestätigungsanfrage den mit einem Anwendungszertifikat signierten öffentlichen Schlüssel enthält;
nach der Bestätigung Empfang eines Geräteschlüssels vom Terminalverwaltungsserver (120), wobei der Geräteschlüssel mit dem öffentlichen Schlüssel verschlüsselt ist;
Speichern des Geräteschlüssels im sicheren Speicher (118);
nach der log-in Anmeldung Empfang eines Autorisierungssitzungstokens vom Terminalverwaltungsserver (120);
Empfangen einer Zahlungstransaktionsanfrage bei der Anwendung für sichere Zahlungstransaktionen (116);
Lesen einer kontaktlosen Karte (114) durch die Anwendung für sichere Zahlungstransaktionen (116) über eine Kommunikationsschnittstelle des persönlichen mobilen Kommunikationsgeräts (112);
Senden von Zahlungsinformationen an ein Zahlungsgateway (130) des Terminalverwaltungsservers (120) zur Verarbeitung, wobei die Zahlungsinformationen Zahlungsdaten, kontaktlose Kartendaten, das Autorisierungssitzungstoken und ein letztes Transaktionstoken umfassen, wobei das letzte Transaktionstoken ein Token ist, das während einer vorherigen erfolgreichen Transaktion der Anwendung für sichere Zahlungstransaktionen (116) generiert wurde, und wobei die Zahlungsinformationen mit dem Geräteschlüssel verschlüsselt sind und wobei der Geräteschlüssel vor seiner Verwendung zur Verschlüsselung der Zahlungsinformationen mit dem privaten Schlüssel entschlüsselt wird;
Löschen der gesendeten Zahlungsinformationen aus der Anwendung für sichere Zahlungstransaktionen (116), die auf dem persönlichen mobilen Kommunikationsgerät (112) ausgeführt wird;
nach Genehmigung der Zahlungstransaktion:
Empfangen einer Antwort mit einer Benachrichtigung vom Zahlungsgateway (130) zur Ausführung der Zahlungstransaktion;
Empfangen eines erneuerten Tokens für die letzte Transaktion vom Zahlungsgateway (130); und
Ersetzen des Tokens für die letzte Transaktion durch das erneuerte Token für die letzte Transaktion;
oder
nach Ablehnung der Zahlungstransaktion Empfangen einer Antwort vom Zahlungsgateway (130) mit einer Benachrichtigung über die Ablehnung.

11. Das Verfahren gemäß Anspruch 10, wobei die Bestätigungsanfrage zusätzlich eine mobile Kommunikationsgeräte-ID und Anmeldeinformationen umfasst.

12. Das Verfahren gemäß Anspruch 10 oder 11, wobei das Ausführen der Anwendung für sichere Zahlungstransaktionen (116) zusätzlich das Empfangen eines oder mehrerer PIN-Zertifikate vom Terminalverwaltungsserver (120) nach Bestätigung und das Speichern des oder der PIN-Zertifikate im sicheren Speicher (118) umfasst.

13. Das Verfahren gemäß Anspruch 12, wobei die Zahlungsinformationen zusätzlich PIN-Blockdaten enthalten, wenn ein Transaktionsbetrag einen vordefinierten Grenzwert überschreitet, und wobei die PIN-Blockdaten eine der kontaktlosen Karte (114) zugeordnete PIN umfassen, die mit einem Zertifikat eines oder mehrerer PIN-Zertifikate des Ausstellers der kontaktlosen Karte verschlüsselt ist.

14. Das Verfahren gemäß einem der Ansprüche 10 bis 13, wobei die Kommunikationsschnittstelle Near Field Communikation ist.

15. Ein Computerprogrammprodukt mit computerlesbaren Anweisungen, die, wenn sie auf einem geeigneten System geladen und ausgeführt werden, die Schritte eines Verfahrens gemäß einem der Ansprüche 10 bis 14 ausführen.

## Revendications

1. Client (110) comprenant une application pour des transactions de paiement sécurisées (116), l'application (116) s'exécutant sur un appareil de communication mobile personnel (112), dans lequel le client (110) est configuré pour:
lors d'une inscription initiale, générer une paire de clés publique et privée et stocker la clé privée dans un stockage sécurisé (118) sur l'appareil de communication mobile personnel (112);
envoyer une demande d'attestation à un serveur de gestion de terminal (120), la demande d'attestation comprenant la clé publique signée avec un certificat d'application;
après attestation, recevoir une clé de périphérique du serveur de gestion de terminal, dans laquelle la clé de périphérique est chiffrée avec la clé publique; stocker la clé de l'appareil dans le stockage sécurisé (118);
lors de la connexion, recevoir un jeton de session d'autorisation du serveur de gestion des terminaux (120);
recevoir une demande de transaction de paiement à l'application pour des transactions de paiement sécurisées (116);
lire une carte sans contact (114) par l'application pour des transactions de paiement sécurisées (116) en utilisant une interface de communication de l'appareil de communication mobile personnel (112);
envoyer des informations de paiement à une passerelle de paiement (130) du serveur de gestion de terminal (120) pour traitement, les informations de paiement comprenant des données de paiement, des données de carte sans contact, le jeton de session d'autorisation et un jeton de dernière transaction, le jeton de dernière transaction étant un jeton généré lors d'une transaction réussie précédente à partir de l'application pour les transactions de paiement sécurisées (116), et les informations de paiement étant chiffrées avec la clé de l'appareil, et la clé de l'appareil étant déchiffrée à l'aide de la clé privée avant d'être utilisée pour chiffrer les informations de paiement;
supprimer les informations de paiement envoyées de l'application pour les transactions de paiement sécurisées (116) exécutées sur l'appareil de communication mobile personnel (112);
après approbation de la transaction de paiement:
recevoir une réponse avec une notification de la passerelle de paiement (130) pour l'exécution de la transaction de paiement;
recevoir un jeton de dernière transaction renouvelé de la passerelle de paiement (130); et
remplacer le dernier jeton de transaction par le dernier jeton de transaction renouvelé;
ou
en cas de rejet de la transaction de paiement, recevoir une réponse de la passerelle de paiement (130) avec une notification de rejet.

2. Client (110) selon la revendication 1, dans lequel la demande d'attestation comprend en outre un identifiant de dispositif de communication mobile et des identifiants de connexion.

3. Client (110) selon la revendication 1 ou 2, configuré pour recevoir un ou plusieurs certificats PIN du serveur de gestion de terminal (120) après attestation et stocker ces certificats dans le stockage sécurisé (118).

4. Client (110) selon la revendication 3, dans lequel les informations de paiement comprennent en outre un bloc de données PIN, lorsque le montant de la transaction dépasse une limite prédéfinie, et dans lequel le bloc de données PIN comprend un code PIN associé à la carte sans contact (114), le code PIN étant chiffré avec un certificat issu du ou des certificats PIN respectifs de l'émetteur de la carte sans contact (114).

5. Client (110) selon l'une quelconque des revendications 1 à 4, dans lequel l'interface de communication est une Communication en Champ Proche.

6. Serveur de gestion de terminal (120) pour les transactions de paiement sécurisées configuré pour:
enregistrer un identifiant d'appareil de communication mobile d'un appareil de communication mobile personnel (112) et les informations de connexion à associer à l'identifiant de l'appareil de communication mobile;
recevoir une demande d'attestation d'un client (110) sur le dispositif de communication mobile personnel (112), la demande comprenant une clé publique générée par le client (110), et la clé publique étant signée avec un certificat d'application;
après attestation de l'ID de l'appareil de communication mobile et du certificat d'application, générer une clé d'appareil et envoyer la clé d'appareil chiffrée avec la clé publique au client (110);
lors de la connexion du client, envoyer un jeton de session d'autorisation au client (110);
recevoir des informations de paiement du client (110) pour traitement au niveau d'une passerelle de paiement (130) du serveur de gestion de terminal (120), les informations de paiement comprenant des données de paiement, des données de carte sans contact, le jeton de session d'autorisation et un jeton de dernière transaction, le jeton de dernière transaction étant un jeton généré lors d'une transaction réussie précédente à partir de l'application pour les transactions de paiement sécurisées (116), et les informations de paiement étant cryptées avec la clé du dispositif;
décrypter les informations de paiement reçues et vérifier le jeton de session d'autorisation et le jeton de la dernière transaction;
lorsqu'une correspondance entre le jeton de session d'autorisation et le dernier jeton de transaction est confirmée, envoyer les informations de paiement pour traitement à un processeur de carte (140);
recevoir une réponse du processeur de carte (140), la réponse comprenant:
une approbation pour la transaction de paiement, dans laquelle l'approbation déclenche la passerelle de paiement (130) pour:
envoyer une réponse au client (110) avec une notification pour l'exécution de la transaction de paiement;
générer un dernier jeton de transaction renouvelé;
envoyer le dernier jeton de transaction renouvelé au client (110);
et
remplacer le dernier jeton de transaction par le dernier jeton de transaction renouvelé;
ou
un rejet de la transaction de paiement, dans lequel le rejet déclenche la passerelle de paiement (130) pour envoyer une réponse avec une notification du rejet au client (110).

7. Serveur de gestion de terminal (120) selon la revendication 6, dans lequel la demande d'attestation comprend en outre l'identifiant du dispositif de communication mobile et les identifiants de connexion.

8. Serveur de gestion de terminal (120) selon la revendication 6 ou 7, configuré pour envoyer un ou plusieurs certificats PIN au client après attestation.

9. Serveur de gestion de terminal (120) selon la revendication 8, dans lequel les informations de paiement comprennent en outre un code PIN bloqué, lorsque le montant de la transaction dépasse une limite prédéfinie, et dans lequel le code PIN bloqué comprend un code PIN associé à une carte sans contact (114) utilisée par le client pour la transaction de paiement, le code PIN étant chiffré avec un certificat issu du ou des certificats PIN respectifs de l'émetteur de la carte sans contact (114).

10. Procédé mis en œuvre par ordinateur pour des transactions de paiement sécurisées, le procédé comprenant :
une exécution par un client (110), d'une application pour des transactions de paiement sécurisées (116) sur un appareil de communication mobile personnel (112), l'exécution de l'application (116) comprenant:
lors de l'inscription initiale, une génération d'une paire de clés publique et privée et stocker la clé privée dans un stockage sécurisé (118) sur l'appareil de communication mobile personnel (112);
un envoi d'une demande d'attestation à un serveur de gestion de terminal (120), la demande d'attestation comprenant la clé publique signée avec un certificat d'application ;
après attestation, une réception d'une clé de dispositif du serveur de gestion de terminal (120), la clé de dispositif étant chiffrée avec la clé publique;
un stockage de la clé de l'appareil dans le stockage sécurisé (118);
lors de la connexion, une réception d'un jeton de session d'autorisation du serveur de gestion des terminal (120);
une réception d'une demande de transaction de paiement à l'application de transactions de paiement sécurisées (116);
une lecture d'une carte sans contact (114) par l'application de transactions de paiement sécurisées (116) à l'aide d'une interface de communication de l'appareil de communication mobile personnel (112);
un envoi d'informations de paiement à une passerelle de paiement (130) du serveur de gestion de terminal (120) pour traitement, les informations de paiement comprenant des données de paiement, des données de carte sans contact, le jeton de session d'autorisation et un jeton de dernière transaction, le jeton de dernière transaction étant un jeton généré lors d'une transaction réussie précédente à partir de l'application pour les transactions de paiement sécurisées (116), et les informations de paiement étant chiffrées avec la clé de l'appareil, et la clé de l'appareil étant déchiffrée à l'aide de la clé privée avant d'être utilisée pour chiffrer les informations de paiement;
une suppression des informations de paiement envoyées depuis l'application pour les transactions de paiement sécurisées (116) exécutées sur l'appareil de communication mobile personnel (112);
après approbation de la transaction de paiement :
une réception d'une réponse avec une notification de la passerelle de paiement (130) pour l'exécution de la transaction de paiement ;
une réception d'un jeton de dernière transaction renouvelé de la passerelle de paiement (130); et
un remplacement du dernier jeton de transaction par le dernier jeton de transaction renouvelé;
ou
en cas de rejet de la transaction de paiement, une réception d'une réponse de la passerelle de paiement (130) avec une notification de rejet.

11. Procédé selon la revendication 10, dans lequel la demande d'attestation comprend en outre un identifiant de dispositif de communication mobile et des identifiants de connexion.

12. Procédé selon la revendication 10 ou 11, dans lequel l'exécution de l'application pour les transactions de paiement sécurisées (116) comprend en outre la réception d'un ou plusieurs certificats PIN du serveur de gestion de terminal (120) lors de l'attestation et le stockage du ou des certificats PIN dans le stockage sécurisé (118).

13. Procédé selon la revendication 12, dans lequel les informations de paiement comprennent en outre un bloc de données PIN, lorsque le montant de la transaction dépasse une limite prédéfinie, et dans lequel le bloc de données PIN comprend un code PIN associé à la carte sans contact (114), le code PIN étant chiffré avec un certificat issu du ou des certificats PIN respectifs de l'émetteur de la carte sans contact.

14. Procédé selon l'une quelconque des revendications 10 à 13, dans lequel l'interface de communication est une Communication en Champ Proche.

15. Produit de programme informatique comprenant des instructions lisibles par ordinateur qui, lorsqu'elles sont chargées et exécutées sur un système approprié, exécutent les étapes d'un procédé selon l'une quelconque des revendications 10 à 14.
